# EUROPEAN PATENT APPLICATION

(11) **EP 2 090 977 A1**
(43) Date of publication of application: **19.08.2009**
(21) Application number: 07806578.6
(22) Date of filing: 28.08.2007
(51) Int. Cl.: G06F 3/16, G10L 15/00

(54) **COMPUTER-EXECUTABLE PROGRAM, METHOD, AND PROCESSING DEVICE**

(30) Priority: 28.08.2006 JP 2006231236
(71) Applicant: Tokyo Electric Power Company, Tokyo 100-8560 (JP); Crescent One CO., LTD., Tokyo 103-0011 (JP)
(72) Inventor: MIYAMOTO, Yoshinori, Tokyo 100-8560 (JP); KOBAYASHI, Isao, Tokyo 100-8560 (JP); SONEHARA, Sinji, Tokyo 100-8560 (JP); ASAI, Yoshiharu, Tokyo 103-0011 (JP); UTO, Masaaki, Tokyo 103-0011 (JP); AIZAWA, Haruna, Tokyo 103-0011 (JP)
(74) Representative: Betten & Resch
(86) International application number: PCT/JP2007/067105
(87) International publication number: WO 2008/032594

(57) **Abstract**

According to the present invention, a voice recognition function is added to a sheet displayed in a computer screen that contains plural data entry elements, without making any change in a program generating the sheet. More concretely, a computer is let function as a unit for receiving data concerning an operation made to a user interface by an inputting device of the computer from a computer program, a unit for receiving data concerning candidate sets of characters that may be recognized from a sound of voice, and that may be entered to a sheet in relation to one of plural positions in the sheet, when the user interface receives a selection of the one of the plural positions in the sheet, and a unit for storing the data concerning the candidate sets of characters in relation to the one of the plural positions in the sheet.

## Description

### TECHNICAL FIELD

This invention relates to a program that is executable by a computer, a method, and a data processing apparatus, for facilitating voice recognition processing.

### BACKGROUND ART

A spreadsheet is a well known popular tool used in a computer for storing and managing data. Spreadsheets are generated in accordance with a computer program called as a spreadsheet program. A spreadsheet comprises a structure having plural cells for data entry that are aligned to form a table. Each of the cells is specified by its numbers of row and column, and varied types of data such as numbers, characters, etc. may be entered and displayed in each of the cells. In response to signals from data entry devices such as keyboards, pointing devices, etc., spreadsheets function as a user interface for holding data, displaying the data, and processing the data. On the other hand, a user interface utilizing voice recognition has been proposed as a data entry device that may substitute keyboards, pointing devices, etc. (see Patent Document 1).

However, no case has been found where data entry in a spreadsheet is realized by use of voice recognition.

For adding a voice recognition function to a normal user interface using a display, it is required to install a voice recognition engine (see, for example, Non-patent Document 1) to a terminal device, and to add an interface module program for providing function of receiving data generated by the voice recognition engine to a computer program (referred to as simply "the program" hereinafter) that realizes the existing user interface at the terminal device.

Normally, it is required to modify a source program of the program and compile the modified source program for adding the interface module to the program. In other words, it is necessary to develop the voice recognition engine and the modified program to which the interface module is embedded.
[Patent Document 1] Japanese Patent Publication No. 2004-246865
[Non-patent Document 1] "Voice Recognition Engine", [online], IBM Japan, Ltd., [searched on August 8,2006], Internet (URL:http://www-06.ibm.com/jp/voiceland/technology/p03.html)

The present invention is aimed to provide people with a technique for adding a voice recognition function to a spreadsheet, that is displayed on a computer screen and comprises data entry elements, without modifying a program for realizing the spreadsheet in the computer screen.

### SUMMARY OF INVENTION

In the present invention, the following means are employed to solve the aforementioned problem. The present invention provides a coordination program for letting a computer that executes a computer program containing a user interface, the user interface having plural data entry elements each of which is related to each of plural positions in a sheet displayed in a screen of the computer and displaying, when a data set is set in one of the plural data entry elements, the entered data set at a position related to the one of the plural data entry elements in the sheet in a predetermined format, function as: a unit for receiving data concerning an operation made to the user interface by an inputting device of the computer from the computer program, a unit for receiving data concerning candidate sets of characters that may be recognized from a sound of voice, and that may be entered to the sheet in relation to one of the plural positions in the sheet, when the user interface receives a selection of the one of the plural positions in the sheet, and a unit for storing the data concerning the candidate sets of characters in relation to the one of the plural positions in the sheet.

In this description, 'sheet' means 'spreadsheet' generated by, for example, a spreadsheet program. However, when a spreadsheet comprises plural sub-sheets each of which functions as a piece of a virtual paper for calculations, 'sheet' may mean one of the plural sub-sheets.

In accordance with the present invention, when the user interface receives an instruction to select any one position from among the plural positions in the sheet, data concerning candidate sets of characters that may be indicated by voice are received by the computer and stored in relation to the selected position in the sheet. Accordingly, the computer program of the present invention can cooperatively works with the computer program generating the user interface, and let the computer program to store the data concerning the candidate sets of characters in relation to the selected position in the sheet for preparing for specifying a set of characters on the basis of a sound.

In other words, according to the present invention, a voice recognition function can be added to a sheet shown in a computer screen containing cells for data entry without make any substantial change to the program generating the sheet in the computer screen.

According to the present invention, the coordination program may further let the computer function as: a unit for receiving a recognized set of characters from a voice recognition unit, the voice recognition unit obtaining a sound and recognizing a set of characters indicating the sound, and a unit for performing data processing in relation to the recognized set of characters received from the voice recognition unit. According to such a program of the present invention, a data processing in relation to the characters received from the voice recognition unit is performed.

In a preferred embodiment, the data processing in relation to the set of characters may be any one of data processing for matching the recognized set of characters and the data concerning the candidate sets of characters, data processing for converting the recognized set of characters in a predetermined format in accordance with the data concerning the candidate sets of characters, data processing for instructing the computer program to enter the recognized set of characters or the converted recognized set of characters to the one of the plural data entry elements, data processing for instructing the computer program to display the recognized set of characters or the converted recognized set of characters in the one of the plural data entry elements, data processing for instructing the computer program to select one of the plural positions in the sheet, and data processing for instructing the computer program to change, when another sheet that is different from the sheet is displayed in a screen of the computer together with the sheet as a set of layers, an order of the sheet and the another sheet in the set of layers.

When the above-mentioned constitution is adopted, data concerning candidate sets of characters that may be received from the voice recognition unit for recognizing a set of characters indicating a sound are stored in advance, and a set of characters received from the voice recognition unit is processed in accordance with the stored data concerning candidate sets of characters. Moreover, the received set of characters or the processed set of characters is stored in relation to the selected position in the sheet, and displayed in the selected position.

In a preferred embodiment, the coordination program may further let the computer function as: a unit for letting a user to appoint in advance another position in the sheet to which another recognized set of characters should be entered after the instruction to enter the recognized set of characters is completed, and wherein: the unit for performing data processing may change a position to be processed from the one of the plural positions to the another position that is appointed in advance, after the instruction to enter the recognized set of characters is completed. According to such an embodiment of the present invention, when a data processing with regard to one set of characters is completed, the computer may change a position for the next data processing.

In a preferred embodiment, the coordination program may further let the computer function as: a unit for storing a voice data set indicating a sound that is received from the voice recognition unit in relation to a position in the sheet, and a unit for reproducing a sound by use of a reproducing unit in accordance with a voice data set that is stored in relation to a position in the sheet when the user interface receives a selection of the position. According to such an embodiment of the present invention, voice stored in relation to a position on the sheet may be reproduced in response to a selection of the position by the user. Accordingly, the user may check voice that was used for voice recognition just by selecting a position to which the voice recognition was performed in relation.

In a preferred embodiment, the sheet may contain a table having plural elements each of which corresponds to each of the plural data entry elements aligned in a matrix, and each of the positions in the sheet may be specified by a low identifier for identifying one of plural lows of the table and a column identifier for identifying one of plural columns of the table.

The present invention also provides a data processing apparatus having the above-mentioned functions. The present invention also provides a method in which the above-mentioned data processing is performed by a computer. Moreover, the present invention also provides a computer readable recording medium that records a program executable by a computer, the program letting a computer function as the above-mentioned units.

### BRIEF DESCRIPTION OF DRAWINGS

Figure 1 illustrates a series of operational procedures performed when a coordination program is started by a data processing apparatus;
Figure 2 illustrates a series of operational procedures performed in a voice recognition setting mode;
Figure 3 illustrates a series of procedures performed when data is entered to a spreadsheet to which voice recognition information is set;
Figure 4 illustrates a series of procedures performed when recorded voice is reproduced;
Figure 5 illustrates a composition of a basic setting sub-screen;
Figure 6 illustrates a composition of a type/format setting sub-screen;
Figure 7 illustrates a composition of a candidate data setting sub-screen;
Figure 8 illustrates relations between tables that are referred to by the coordination program when a result of voice recognition is stored in relation to a cell;
Figure 9 illustrates relations between tables that are used by the coordination program when voice is reproduced;
Figure 10 illustrates a series of procedures performed by a spreadsheet program for generating a spreadsheet and the coordination program when processing triggered by events are executed;
Figure 11 illustrates an overview flow of procedures for setting voice recognition parameters;
Figure 12 illustrates an overview flow of procedures for entering data by voice recognition; and
Figure 13 illustrates an overview flow of procedures for reproducing recorded voice.

### DESCRIPTION OF EMBODIMENTS

A data processing apparatus according to an exemplary embodiment to implement the present invention (referred to as 'embodiment' hereinafter) is described below with reference to the drawings. The composition of the embodiment described below is an example for illustrating the present invention, and the present invention should not be interpreted as limited by the composition of the embodiment.

### < Essential features of the invention>

The data processing apparatus according to the embodiment executes a coordination program, corresponding to a coordination program in the claims of present invention, for facilitating an application program to obtain a voice recognition function. For example, the data processing apparatus executes a spreadsheet program, corresponding to a computer program in the claims of present invention, that is one of well known application programs executed by a general-purpose computer, a voice recognition engine for recognizing voice inputted via an external inputting device such as a microphone, and the coordination program.

The coordination program is cooperatively executed by the apparatus together with the spreadsheet program and the voice recognition engine, and adds a voice recognition function to the spreadsheet program as one of functions for entering data to a spreadsheet generated by the spreadsheet program. In general, a spreadsheet contains one or more sub-sheets each of which represents a piece of paper virtually realized by a computer. When a spreadsheet contains two or more sub-sheets, the sub-sheets are shown on a display of computer as a set of layers. In the case, each of the sub-sheets is identified by a name of the sub-sheet. In the embodiment, a name of sub-sheet is simply called as a 'sheet name'.

In the embodiment, when a spreadsheet is utilized by a specific application program, for example for showing a check list of items to be checked in a plant, the spreadsheet is called as a 'data entry sheet'. In the case, each of plural sub-sheets contained in the spreadsheet may also be called as a data entry sheet. A spreadsheet or each of plural sub-sheets of a spreadsheet corresponds to a sheet in the claims of present invention. The coordination program has the following functions:

### (1) Function for facilitating voice recognition settings

The user sets to the facilitating program attributes of data to be stored at a specific position in the spreadsheet such as a cell specified by a low identifier and a column identifier, a set of characters to be stored, a format for displaying the set of characters, etc., that correspond to data relating to a set of characters. Then, the facilitating program stores the obtained data such as the attributes of data, the set of characters to be stored, and the formats for displaying the set of characters in a specific database in relation to management information of the spreadsheet, such as a file name of computer file containing data of the spreadsheet, the sheet name, data for identifying the low, and data for identifying the column.

### (2) Function for facilitating voice data entry

After setting the data to be stored in the database, the user lets the apparatus to perform the coordination program in a voice data entry mode. The user starts the spreadsheet program to display a spreadsheet. The user selects a data entry sheet by inputting its file name and sheet name to the apparatus. Then, the user selects a cell to which voice to be entered from among plural cells in a sub-sheet of the spreadsheet. The user may select the cell by use of an inputting device. By the selection of cell, one position is specified in a sub-sheet functioning as a data entry sheet used by an application program, and the apparatus becomes ready to receives voice entry.

When voice indicating a set of characters configures a word, the voice recognition engine converts the voice to the set of characters. The coordination program receives data of the set of characters indicating the meanings of voice from the voice recognition engine. The coordination program stores the data of recognized set of characters in the selected cell in the sub-sheet specified by the file name and the sheet name.

The coordination program may search a low and a column for specifying a cell for storing the recognized set of characters on the basis of the set of characters recognized by the voice recognition engine. The coordination program may also receives another set of characters, and stored the set of characters in the cell specified by the searched low and column.

For example, when the user needs to input data indicating either bad condition' or 'good condition' with regard to each check item to a data entry sheet for recording results of periodical inspection of a device, the two sets of characters i.e. 'bad condition' and 'good condition' are stored in relation to a target cell by the coordination program in advance.

Before the user starts the periodical inspection of the device, the user let the data processing apparatus to display the spreadsheet functioning as the data entry sheet. During the inspection, when the user produces a sound of 'good condition', the voice recognition engine recognizes the sound of 'good condition' and converts the sound to the set of characters of 'good condition'. The voice recognition engine hands over the recognized set of characters to the coordination program. The coordination program determines whether the set of characters received from the voice recognition engine matches any one of the sets of characters that were stored in the database in advance. When the received set of characters matches one of the sets of characters stored in the database, the coordination program stores the received set of characters in the target cell.

A set of characters indicating a title of the cell for data entry may be stored in relation to the cell in advance. For example, a title of 'the first fan' may be stored in the target cell in advance as well as a data entry area prepared in the target cell. In the case, the recognized set of characters, i.e. either 'bad condition' or 'good condition', is stored in the database together with the title, i.e. 'the first fan'. In the case, the user may select the cell by producing a sound of 'the first fan'.

When the user produces a sound of 'the first fan, good condition', the voice recognition engine recognizes the sound and converts the sound to the sets of characters of 'the first fan' and 'good condition'.

The coordination program specifies a low and a column of a cell by searching them from the database on the basis of the set of characters of 'the first fan'. Then, the coordination program stores the set of characters of'good condition' in the data entry area of the cell specified by the searched low and column, namely after the title of 'the first fan' that is already stored in the cell.

Alternatively, the title of 'the first fan' may be stored in advance in a cell neighboring the target cell in which 'good condition' or 'bad condition' should be stored. Any way may be adopted if the way enables a target cell for storing either'good condition' or'bad condition' to be selected when the set of characters of'the first fan' is recognized.

In this description, 'select a cell' means a pointer, that moves on a computer screen in response to operations made to a pointing device, or a cursor, that moves on the computer screen in response to operations made to a keyboards, is placed on the cell. In this description, 'select a cell' may be expressed as 'put the focus on a cell' or 'move the focus to a cell'. A set of characters to be used for selecting a specific cell is called as a 'moving-focus keyword'. Moving-focus keywords are reserved keywords used only in the spreadsheet. The data processing apparatus may be constructed so that the user may move the focus to a specific sub-sheet among plural sub-sheets forming a set of layers. In the case, names of sub-sheets, namely sheet names, need to be registered as moving-focus keywords.

The data processing apparatus may be constructed so that the user may select a specific window by a moving-focus keyword from among plural windows when plural spreadsheet programs are simultaneously executed and plural windows of the spreadsheets are displayed on the display. In the case, data for identifying each of the spreadsheet programs such as names of the spreadsheet programs, version numbers of the spreadsheet programs, names of data entry sheets, etc. need to be registered as moving-focus keywords. Processing triggered by such a moving-focus keyword is one example of data processing in relation to the set of characters in the claims of the present invention.

As explained above, the coordination program obtains data indicating sets of characters to be recognized from voice, such as titles of spreadsheets, candidates of sets of characters to be stored, and options of sets of characters to be selected by the user, in advance, and stores the data in the database in relation to identifiers of cells. When the spreadsheet is displayed, the spreadsheet receives a set of characters recognized from voice produced by the user, and executes a specific data processing.

The specific data processing may be, for example, processing for moving the focus to a specific cell in the spreadsheet, namely selecting the specific cell, processing for storing the recognized set of characters in the spreadsheet, processing for selecting one of the predetermined options, etc. The specific data processing may also be processing that is executed by the spreadsheet program when a command that is registered as a reserved keyword in advance, is made to the spreadsheet program. For example, when the user produces a sound of 'save', the spreadsheet program may display a screen showing a query of 'Do you save the data of spreadsheet?', and when the user produces a sound of 'OK' in response to the query, the spreadsheet program may save the data of spreadsheet as a computer file.

### (3) Function for recording voice data

The coordination program stores voice data indicating voice produced by the user as a voice-log file in relation to data identifying a cell. When the user selects a mode for reproducing voice and selects one of cells to which voice-log files are stored in relation, the coordination program searches a voice-log file stored in relation to the selected cell. When only one voice-log file is searched, the coordination program reproduces voice in accordance with the searched voice-log file. When two or more voice-log files are searched, the coordination program displays a list of the searched voice-log files. When the user selects one voice-log file from among the voice-log files in the list and makes an instruction of reproducing voice, the coordination program reproduces voice in accordance with the selected voice-log file.

As explained above, voice, which was produced by the user when the user stored a set of characters to a cell by the above-mentioned voice recognition function, can e reproduced as it was. Namely, the coordination program can reproduce each of voices that was used for storing a set of characters to each of cells.

### <Composition of hardware>

The coordination program may be executed by a general-purpose data processing apparatus, that corresponds to a computer and data processing apparatus in the claims of the present invention, such as a personal computer, a PDA (personal digital assistance), a mobile phone, a PHS (Personal Handyphone System), and a server in a network for providing plural terminal devices with data processing services.

Each of these data processing apparatus comprises a CPU, a memory unit, an input-output interface device, a displaying device, a hard disk, an interface device for communicating with other devices via a network, a microphone for collecting sounds produced by the user, a speaker for generating sounds, a removable drive unit for portable recording media, etc. The data processing apparatus realizes its functions by executing computer programs. Further explanation of compositions and functions of such a data processing apparatus is omitted in this description since they are well known.

### <Outline of operational procedures>

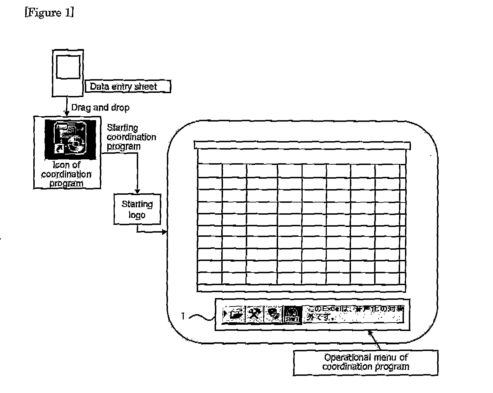

Outline of operational procedures will be explained below with reference to Figures 1 to 4. Figure 1 illustrates a series of operational procedures that are performed when the coordination program is started by the data processing apparatus. More concretely, Figure 1 illustrates an operation made in a screen of the data processing apparatus by the user using a pointing device such as a mouse. In the screen of the data processing apparatus, a spreadsheet containing a data entry sheet, to which the voice recognition function is added, is shown. The data entry sheet is, for example, a sheet for recording results of periodical inspections of specific equipment in a plant.

In the screen, graphical objects (referred to as 'icons' hereinafter) of the coordination program are also shown. The user may make operations to the icons by a pointer that is operable by a pointing device such as a mouse, or by a cursor that is movable by specific keys of a keyboard. The user may select each of the icons by pressing a specific button or key when the pointer or cursor is placed on the icon. The user may move each of the icons by moving the pointer or cursor in the screen when the icon is selected. Such an operation is called as 'drag'. The user may place each of the icons at a target position in the screen by releasing the pressed button or key after moving the icon to the target position. Such a series of operations are called as 'drag and drop'.

The user may starts the coordination program and the spreadsheet program for handling a spreadsheet by, for example, dragging the spreadsheet containing the data entry sheet and dropping the spreadsheet on the icon of the coordination program in the screen displayed by the personal computer. When the coordination program is started, a starting logo indicating a developer of the coordination program is shown in the screen.

In Figure 1, operational menu 1 of the coordination program is shown in an area neighboring the spreadsheet of the spreadsheet program. It shows that the coordination program watches operations made to the spreadsheet program. If the spreadsheet program has already opened an existing file and shown the sub-sheet in the screen when the drag-and-drop operation is made, the coordination program obtains names of the file and sub-sheet when the operation is made.

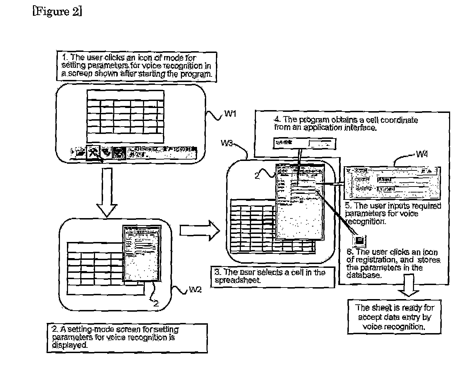

Figure 2 illustrates a series of operational procedures performed in a voice recognition setting mode. When the user selects mode-setting icon 1A for voice recognition by the pointing device from operational menu 1 of the coordination program (see window W1, 'window' is omitted hereinafter), the coordination program changes its mode to data setting mode for voice recognition in response to the selection, and shows setting-mode screen 2 (see W2). In Figure 2, mode-setting icon 1A for voice recognition is shown as a symbol illustrating a hammer and a spanner placed in a cross shape.

The user selects one of the cells of the spreadsheet (see W3). In window W3 of Figure 2, the selected cell is shown as a cell with hatching of diagonal lines. The spreadsheet program notifies the event that the cell was selected to the coordination program as a communication between processes managed by the OS. When the event of selection of cell is made, names of a low and a column of the cell in the spreadsheet, i.e. a cell coordinate, obtained by one of libraries of application interface provided by the OS, is notified.

The coordination program receives the notified cell coordinate via the library, and set the cell coordinate in a field for a cell coordinate in setting-mode screen 2 for voice recognition. Then, the user inputs parameters required for voice recognition in setting-mode screen 2 for voice recognition by use of the inputting device such as a keyboard. In Figure 2, a set of characters of 'bad condition (in Japanese with Chinese characters) and a set of characters of 'bad condition (in Japanese without Chinese character indicating a pronunciation of the phrase) are set (see W4). The operations for setting the parameters may also be done by the voice recognition function. For example, the computer may be constituted so that, when the user produces a sound of 'bad condition' when the focus is put on window W4 of Figure 2, the computer displays a set of characters of bad condition' that is recognized from the sound. The user may instruct the computer to convert the recognized set of characters of 'bad condition' (in Japanese without Chinese character) to a set of characters of 'bad condition' (in Japanese with Chinese characters) by pressing a specific key or producing a sound of 'convert', and set the converted set of characters in the target field in window W4.

The user repeats the same sort of operation for setting a parameter to a cell in the spreadsheet. When the user selects an icon for registration by the pointing device, all of parameters set to cells are registered in the database. Parameters relating to a specific cell are stored in the database in relation to a low and a column of the cell. This is operational procedures for preparing the spreadsheet to receive data entries by voice.

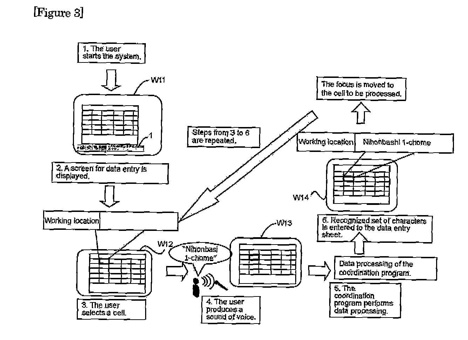

Figure 3 illustrates a series of operational procedures for enter data by voice to the spreadsheet with the parameters for voice recognition. The user starts the coordination program and the spreadsheet program. The operational procedures for starting the programs were explained above with reference to Figure 2. For example, when the user is a periodical inspector of equipment in a plant, the user drags and drops the spreadsheet that functions as a data entry sheet for recording results of the periodical inspections to the icon of the coordination program. By the operation, operational menu 1 of the coordination program is displayed together with the spreadsheet.

In the coordination program, a mode for entering data by voice that is, for example, indicated by a symbol of microphone is selected as a default mode (see W11).

Then, the user selects a cell to which data should be entered. The selection of cell may be done either by operating the pointing device or by producing the moving-focus keyword. In the example shown in Figure 3, the cell with hatching of diagonal lines in window W12 is selected. The selected cell and the cell that is located to its immediate left are shown in a magnified view.

It is supposed that the selected cell is for text data entry. To the cell of immediate left of the selected cell, a title of 'working location' is entered.

The user produces a sound of, for example, 'nihonbashi 1-chome' (an address in Japan). The voice is inputted to the data processing apparatus via the microphone, and handed over to the voice recognition engine. The voice recognition engine recognizes the sound as 'nihonbashi 1-chome', and hands over the result of recognition to the coordination program via a predetermined application interface.

On the other hand, all addresses that may be entered to the data entry sheet as working locations are registered in the database in advance. It is supposed that 'nihonbashi 1-chome' is registered in the database as one of the candidate addresses. Accordingly, the coordination program determines that the result of voice recognition, i.e. 'nihonbashi 1-chome' matches one of the candidate addresses to be entered as working locations.

In this case, the coordination program stores the recognized set of characters of 'nihonbashi 1-chome' in the selected cell. More concretely, the coordination program hands over a file name of the spreadsheet, a name of the sub-sheet, a cell coordinate of the selected cell, and the data to be entered, to the spreadsheet program via the application interface, and the spreadsheet program stores the data in the cell and displays the data in the cell in the sub-sheet in a predetermined format. As a result, the recognized set of characters of 'nihonbashi 1-chome' is shown in the area for text data entry following the title of 'working location' (see W14). In the above-explained example, the area for entering a set of characters recognized by voice recognition is predetermined. Alternatively, the data processing apparatus may be constituted so that the user can select an area for data entry by voice recognition from among plural candidate areas that are prepared in advance. In the case, the user can select, for example, a title of 'the first fan' from a title lists by voice, and select by voice either 'bad condition' or 'good condition' that are shown in a pull-down menu.

In the above example, the user selects the cell to which data should be entered by use of an inputting device such as the pointing device. Alternatively, the user may use a moving-focus keyword to put the focus on the cell for data entry. For example, it is supposed that a keyword of 'working location' is registered as a moving-focus keyword for moving the focus on the cell for the above-mentioned data entry. In the case, when the user produces a sound of 'working location', the cell is selected. Further alternatively, the data processing apparatus may be constituted so that the user may select the cell by producing a sound of 'working location' in a case where a set of characters of 'working location' is stored in the database in relation only to the cell. The data processing apparatus may also be constituted so that the user may select the cell and enter a set of characters of 'nihonbashi 1-chome' by producing a sound of 'nihonbashi 1-chome' in a case where the set of characters of 'nihonbashi 1-chome' is registered as candidate data to be entered only to the cell.

The data processing apparatus may be constituted so that the user may open the spreadsheet functioning as the data entry sheet and let the coordination program watch the spreadsheet by starting the coordination program and selecting the spreadsheet from a menu list of the coordination program, instead of dragging and dropping the spreadsheet to the icon of the coordination program.

The data processing apparatus may also be constituted so that the user may start the coordination program, and then start the spreadsheet program to generate the data entry sheet to be processed. In the case, the coordination program keep watching the spreadsheet program at a predetermined time intervals via an application interface library provided by the OS. When the coordination program finds that the spreadsheet program is started, the coordination program obtains a file name of the data entry sheet displayed by the spreadsheet, a name of the sub-sheet, and a cell coordinate from the application interface library. When plural spreadsheets are generated, the coordination program may select to watch, for example, a spreadsheet (or a window) displayed in the top layer.

Moreover, when plural sub-sheets are contained in one spreadsheet as a set of layers, the coordination program may select to watch, for example, a sub-sheet displayed in the top layer.

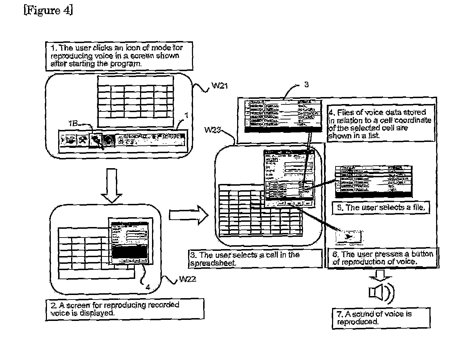

Figure 4 illustrates a series of operational procedures for reproducing recorded voice. As explained above, when a set of characters that is recognized from a sound in a mode for entering data by voice is stored in a cell in the spreadsheet, the coordination program also stores voice data indicating the voice produced by the user for the data entry in relation to the cell. Figure 4 illustrates a series of operational procedures for reproducing a sound in accordance with the voice data.

In the procedures, the user selects icon 1B of a mode for reproducing recorded voice, namely, for example, an icon indicated by a symbol of speaker shown in operational menu 1 of the coordination program, by the pointing device (see W21). In response to the selection by the user, the coordination program displays screen 4 for reproducing recorded voice instead of operational menu 1 (see W22).

Then, the user selects a cell in the spreadsheet to which recorded voice that the user wishes to listen to is stored in relation. For example, the user selects the cell with hatching of diagonal lines in Figure 4. In response to the selection made by the user, the coordination program displays list 3 showing names of voice data files that are stored in relation to the selected cell, which is specified by a low and a column of the spreadsheet.

When the user selects one of the names in list 3 by the pointing device and presses a button for instructing the data processing apparatus to reproduce voice, voice is reproduced in accordance with voice data contained in a file of the selected name. As described above, according to the coordination program, voice data can be recorded in relation to a cell in the spreadsheet, and voice can be reproduced in accordance with voice data in response to selection of a cell made by the user.

### <Composition of screen for parameter setting>

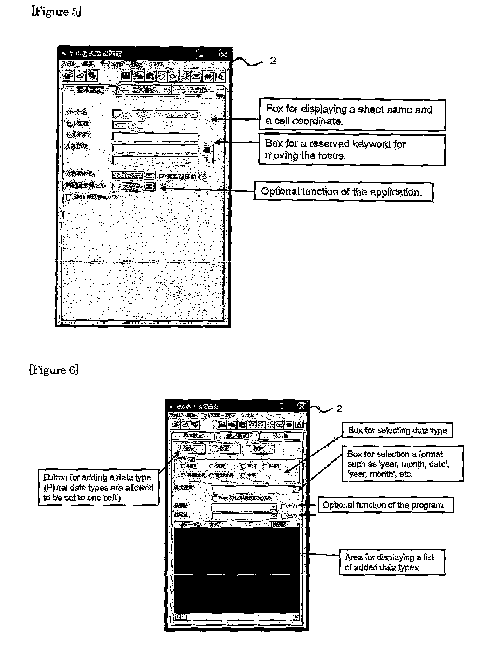

A composition of screen 2 for setting parameters that is used in a mode for setting parameters for voice recognition is explained below with reference to Figures 5 to 7. Screen 2 for setting parameters of the coordination program comprises three sub-screens. The user can select one of the sub-screens to be shown on the display by selecting one of label portions of the sub-screens called as 'tabs' by the pointing device. The sub-screens are called as a basic setting sub-screen, a type/format setting sub-screen, and a candidate data setting sub-screen, respectively.

Figure 5 illustrates a composition of the basic setting sub-screen. The basic setting sub-screen is mainly used for setting parameters for controlling movements of the focus on the spreadsheet. In the basic setting sub-screen, a name of sub-sheet and a cell coordinate, which specify a cell to which the parameters are stored, is shown. The name of sub-sheet indicates a name of sub-sheet that is displayed on the top layer in the spreadsheet that is specified by the user's drag-and-drop operation as explained above with reference to Figure 2. The cell coordinate is a coordinate, i.e. a combination of identifiers of a low and a column in the sub-sheet, of the cell that is selected by the user in the screen for selecting a cell shown in Figure 2 (W3).

In relation to the cell specified by the name of sub-sheet and the cell coordinate, the user enters a name of cell and a set of characters indicating pronunciation of the name of cell. The user may enter such data in text format by, for example, typing keys of the keyboard. The name of cell is used for selecting the cell specified by the cell coordinate in the sub-sheet specified by the name of sub-sheet.

For example, it is supposed that a title of 'the first fan' is stored in a cell, and an area for text data entry is contained in another cell neighboring the cell. The area for text data entry is prepared for storing a result of inspection of the first fan. A set of characters of 'the first fan' is registered as a moving-focus keyword in relation to the cell containing the area for text data entry. While the sub-sheet is ready for receiving data entry by voice, if the user produces a sound of 'the first fan', the voice recognition engine converts the sound to a set of characters of 'the first fan', and hands over the recognized set of characters to the coordination program. The coordination program determines the cell to which the recognized set of characters is registered as a moving-focus keyword on the basis of data stored in the database, and puts the focus on the cell.

In the screen, the user can register a cell to which the focus should be moved after data is entered to the cell containing the area for text data entry. If the user wishes to register such a cell, the user enters a cell identifier to the field of 'cell to be focused', and turns on the check box of 'move the focus after producing a sound'. In accordance with the settings, when the data is entered to the target cell by voice recognition, the coordination program moves the focus to the cell identified by the cell identifier set to the field of 'cell to be focused' after the set of characters recognized by voice recognition is entered to the target cell. Accordingly, the user can enter a series of data sets to different cells respectively by producing voice when the cells are registered as the cells to be focused. This function for letting the user set such a cell to be focused after recognized data is entered to a cell corresponds to a unit for letting a user to appoint in advance another position in the sheet in the claims of the present invention.

In the basic setting sub-screen, a cell to which data to be entered to a currently focused cell is stored is called as a 'cell for data to be referred to'. If a cell identifier is set to the field of 'cell for data to be referred to', data stored in the cell identified by the cell identifier is set to the currently focused cell. In the cell for data to be referred to, for example, data that may be repeatedly stored in the currently focused cell can be stored. Alternatively, in the cell for data to be referred to, for example, data that may be stored in plural cells can be stored.

In the basic setting sub-screen, a check box of 'recognize a series of plural sounds' is for letting the user enter plural data sets to one cell. For example, it is supposed that three names of persons in charge namely 'Yamada', 'Saito', and 'Tanaka' are registered as candidate names to be stored in a cell with a title of 'person in charge'. If the check box of 'recognize a series of plural sounds' is not turned on, when the user puts the focus on the cell and produces a sound of 'Yamada', a set of characters of 'Yamada' is entered to the cell as a name of person in charge. Then, if the user produces a sound of 'Saito' without moving the focus to another cell, the set of characters of 'Yamada' stored in the cell is replaced with the set of characters of 'Saito'.

On the other hand, if the check box of 'recognize a series of plural sounds' is turned on, when the user produces a sound of 'Saito' in a condition that a set of characters of 'Yamada' is stored in the cell, a set of characters of 'Yamada, Saito' is stored in the cell. If the user further produces a sound of 'Tanaka' without moving the focus to another cell, a set of characters of 'Yamada, Saito, Tanaka' is stored in the cell. In this way, the user can enter plural data sets to one cell by turning on the check box of'recognize a series of plural sounds'.

Figure 6 illustrates a composition of the type/format setting sub-screen. The sub-screen is used for setting a type of data to be entered to the cell whose parameters are currently set in the screen for parameter setting, and a format in which the data to be displayed in the cell. The type of data can be selected from among number, currency, date, time, postal code, telephone number, next, etc.

The user selects one of the candidate types of data and presses a button with a label of 'add' by the pointing device in the screen of Figure 6. In response to the operation, the selected type of data is set to the currently focused cell. The coordination program accepts for the user to set plural data types to one cell. If the user wishes to add another type of data to a cell to which one or more types of data have been already set, the user just has to select another type of data and press the button with the label of 'add'.

A format can be set to data other than text data, such as date, time, etc. The user can set a format to these types of data by selecting a format such as year-month-date', 'month-date', and '00:00:00' from a list of formats.

Types of data and formats that are set by the user are shown in the area of 'list of attributes of data to be entered' as a list. The user is allowed to edit or delete any one of the types of data and formats in the list by selecting the type of data/format from the list and pressing a button of 'edit' or 'delete'.

The field of prefix' shown in the type/format setting sub-screen is used for registering sets of characters of prefixes that may be sounded before a sound indicating data to be stored to the cell For example, it is supposed that either a set of characters of 'bad condition' or 'good condition' should be set to a specific cell with a title of 'the first fan'. When the focus is put on the cell, the user is expected to produce only a sound of 'bad condition' or 'good condition'. However, some users may have a habit to produce a sound indicating a result of inspection together with a sound indicating a portion to be inspected like 'the first fan, good condition'. If a set of characters of 'the first fan' is registered as a prefix with regard to the cell, voice recognition is performed without error in such a condition. In the case, when the user produces a sound of 'the first fan, good condition' and the voice recognition engine hands over sets of characters of'the first fan' and 'good condition'to the coordination program, the coordination program can handle the sets of characters properly. For example, if the check box of 'output' shown in the right side of the field of 'prefix' in the type/format setting sub-screen is not turned on, the coordination program ignore the set of characters of 'the first fan' as the prefix, and stores the set of characters of 'good condition' to the cell when these sets of characters are handed over from the voice recognition engine. In the case, if the user produces only a sound of 'good condition' and the coordination program receives only the set of characters of'good condition' from the voice recognition engine, the coordination program determines that the prefix is not sounded. As a result, the coordination program stores the set of characters of 'good condition' to the cell properly.

If a title of 'the first fan' is stored in a cell in advance and a set of characters of 'good condition' or 'bad condition' should be added to the title of 'the first fan', the title of 'the first fan' should be registered as a prefix, and the check box of 'output' should be turned on, with regard to the cell. In the case, when the user produces a sound of 'the first fan, good condition', a set of characters of 'the first fan: good condition' will be set to the cell. When the user produces only a sound of 'good condition', the coordination program determines that the prefix of 'the first fan:' is omitted by the user. Then, the coordination program adds the prefix of 'the first fan:' before the recognized set of characters of 'good condition' in accordance with the check box of 'output'. As a result, a set of characters of 'the first fan: good condition' is stored in the cell. As explained above, a prefix indicates a set of characters of a sound that may be or may not be produced by the user prior to a sound of data to be entered to the cell, and it is used for determining whether the set of characters should be added to the data to be entered to the cell.

Similarly, a suffix is indicates a set of characters of a sound that may be or may not be produced by the user after a sound of data to be entered to the cell, and it is used for determining whether the set of characters should be added to the data to be entered to the cell. For example, if a set of characters of 'is the current date' is registered as a suffix with regard to a cell to which data of date should be entered, and if the check box of 'output' is turned off, when the user produces a sound of 'January 10 is the current date', the coordination program ignore the part of 'is the current date', and stores data indicating 'January 10' in a format of date in the cell.

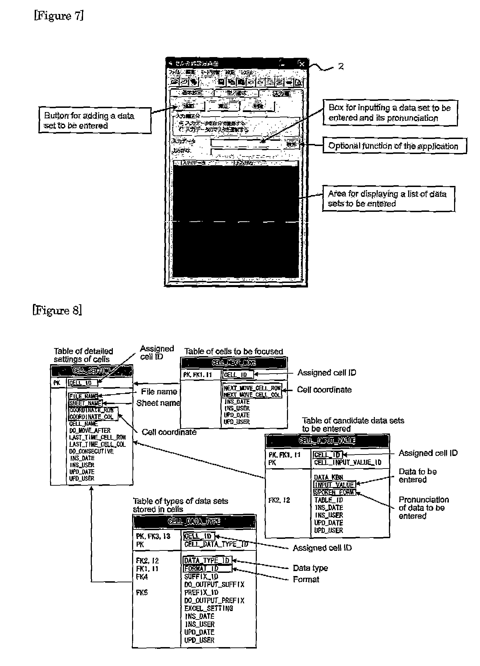

Figure 7 illustrates a composition of the candidate data setting sub-screen. The candidate data setting sub-screen is used for setting candidate data sets that may be entered to a cell and sets of characters indicating pronunciations of the candidate data sets with regard to each cell for which 'text' is selected as a data type in the type/format setting sub-screen illustrated in Figure 6. For example, to a cell of text type, a candidate data set of 'good condition' and its pronunciation may be registered.

To a cell for which 'text' is selected as a data type in the type/format setting sub-screen, plural data sets may be registered as candidate data sets. In the similar way as explained in connection with the type/format setting sub-screen, the candidate data setting sub-screen contains a button of 'add'. The user can register plural candidate data sets and their pronunciations in sequence by pressing the button. For example, the user may register to a cell a candidate data set of 'bad condition' together with its pronunciation. Then the user may register to the same cell another candidate data set of 'good condition' together with its pronunciation by pressing the button.

Candidate data sets that are registered by the user are shown in a list in an area for displaying registered candidate data sets. The user is allowed to edit or delete any candidate data set in the list by selecting the data set and pressing the button of'edit' or 'delete'.

A field of 'search' is used for searching a specific data set from the list of registered candidate data sets. For example, when a lot of candidate data sets are registered, and it is difficult for the user to find a specific candidate data set from them or only a part of the list can be displayed, the user can easily search the specific candidate data set by entering the data set to the field of 'search'.

The data processing apparatus may be constituted so that candidate data sets may be registered (imported) from an external file instead of being entered one by one by use of an inputting device such as the keyboard, especially for a lot of candidate data sets, such as addresses and names of persons, to be easily registered.

### <Structure of database>

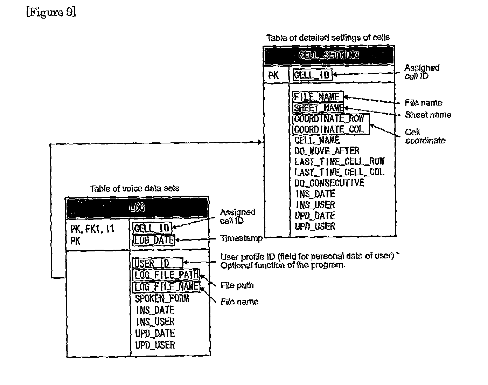

Figures 8 and 9 illustrate a structure of data sets stored in the database that the coordination program manages, the database corresponding to a unit for storing in the claims of the present invention. The database is stored in a hard disk that is not illustrated in the figures. Tables of the database are read from the hard disk and temporarily stored in a memory device. Figure 8 illustrates tables that the coordination program refers to for entering a recognized set of characters to a cell and relations between the tables.

The coordination program uses a 'table of detailed settings of cells', a 'table of cells to be focused', a 'table of candidate data sets to be entered', and a 'table of types of data sets stored in cells'.

The 'table of detailed settings of cells' comprises the following fields: 'cell ID' (CELL#ID), 'file name of data entry sheet containing cell' (FILE#NAME), 'sheet name' (SHEET#NAME), 'cell coordinate' (low (COORDINATE#ROW), column (COORDINATE#COLUMN), 'name of cell' (CELL#NAME), 'flag of movement after voice production' (DO#MOVE#AFTER), 'low of cell that was referred to in the last time' (LAST#TIME#CELL#ROW), 'column of cell that was referred to in the last time' (LAST#TIME#CELL#COLUMN), 'date of data input' (INS#DATE), 'user of data input' (INS#USER), 'date of data update' (UPD#DATE), and 'use of data update' (UPD#USER).

Each data held in the field of'cell ID' (CELL#ID) is a unique identifier that the coordination program assigns to each cell when the coordination program registers parameters entered by the user in the screen for setting parameters for voice recognition illustrated in Figure 5.

Each of cells in any one of data entry sheets is uniquely identified by data sets held in the fields of 'file name of data entry sheet containing cell' (FILE#NAME), 'sheet name' (SHEET#NAME), and 'cell coordinate' (low (COORDINATE#ROW), column (COORDINATE#COLUMN)).

Data sets held in the other fields of the 'table of detailed settings of cells' are registered in the basic setting sub-screen illustrated in Figure 5.

The 'table of cells to be focused' comprises the following fields: 'cell ID' (CELL#ID), 'cell coordinate of cell to be focused in the next time' (NEXT#MOVE#CELL#ROW, NEXT#MOVE#CELL#COLUMN), 'date of data input', 'user of data input', and 'date of data update, and user of data update'. Data sets held in the fields of the 'table of cells to be focused' are registered in the area of 'cell to be focused' in the basic setting sub-screen illustrated in Figure 5.

The 'table of candidate data sets to be entered' comprises the following fields: 'cell ID' (CELL#ID), 'candidate data set to be entered to cell' (INPUT#VALUE), 'pronunciation of candidate data set' (SPOKEN#FORM), etc. Data sets held in the fields of the 'table of candidate data sets to be entered' are registered for each cell in the candidate data setting sub-screen illustrated in Figure 7.

Data sets held in the field of 'candidate data set to be entered to cell' are used for determining whether a recognized set of characters received from the voice recognition engine indicates a correct value.

Data sets held in the field of 'pronunciation of candidate data set' (SPOKEN#FORM) configure an editable portion of a dictionary used by the voice recognition engine to recognize voice. Namely, a combination of data sets registered by the user to the fields of 'candidate data set to be entered to cell' (INPUT#VALUE) ad 'pronunciation of candidate data set' (SPOKEN#FORM) of the 'table of candidate data sets to be entered' is added to the dictionary.

The 'table of types of data sets stored in cells' comprises the following fields: 'cell ID' (CELL#ID), 'type of data' (CELL#DATA#TYPE#ID), 'format' (FORMAT#ID), etc. Data sets held in the fields of the 'table of types of data sets stored in cells' are registered for each cell in the type/format setting sub-screen illustrated in Figure 6.

The database also contains a 'table of moving-focus keywords' that stores keywords for moving the focus to specific cells, although the table is not shown in the figures. When a sound identified by a data set held in the field of 'pronunciation of candidate data set' (SPOKEN#FORM) is converted by the voice recognition engine to a recognized set of characters and the recognized set of characters is handed over to the coordination program, the coordination program searches a cell ID from the 'table of moving-focus keywords' on the basis of the recognized set of characters, and searches a cell coordinate (low (COORDINATE#ROW), column (COORDINATE#COLUMN) from the 'table of detailed settings of cells' on the basis of the searched cell ID. Then, the coordination program moves the focus to a cell identified in the spreadsheet by the searched cell coordinate.

In Figure 8, arrows indicate dependency relationship between the tables. For example, all of the 'table of cells to be focused', 'table of candidate data sets to be entered', and 'table of types of data sets stored in cells' are dependent on the 'table of detailed settings of cells'.

Figure 9 illustrates tables that the coordination program uses when recorded voice is reproduce and relation between the tables. When recorded voice is reproduced, the 'table of detailed settings of cells' and a 'table of voice data sets' are used. The 'table of detailed settings of cells' was explained above with reference to Figure 8. In Figure 9, arrows indicate dependency relationship between the tables as explained in connection with Figure 8.

The 'table of voice data sets' comprises the following fields: 'cell ID' (CELL#ID), 'time stamp' (LOG#DATE), 'user profile ID' (USER#ID), and 'file path' (LOG#FILE#PATH).

Voice data, which was used for a data entry to a cell, is stored as a file that is identified by a data set held in the field of 'file path' and a file name. The file name is generated by data of timing when the file is created, i.e. data indicating year, month, date, and time (hour, minute, and second) when the voice was produced. Accordingly, each of files containing voice data sets can be uniquely identified in the data processing apparatus when a normal data entry is done by voice. When the user selects a cell and makes an instruction to reproduce voice, the coordination program specifies a low and a column of the selected cell in the spreadsheet, and searches a cell ID from the 'table of detailed settings of cells' on the basis of the specified low and column. Then, the coordination program searches combinations of data sets held in the fields of 'file path' (LOG#FILE#PATH) and 'file name' (LOG#FILENAME) from the 'table of voice data sets' to specify files containing voice data sets. The specified files are displayed in a list. When only one file of voice data set is specified, the coordination program reproduces a sound in accordance with the file. When two or more files are specified, the coordination program waits for a specific operation made by the user to select one of the files, and when the user selects one of the files, the coordination program reproduces a sound in accordance with the selected file. The database storing voice data sets corresponds to a unit for storing in the claims of the present invention.

### <Flow of procedures>

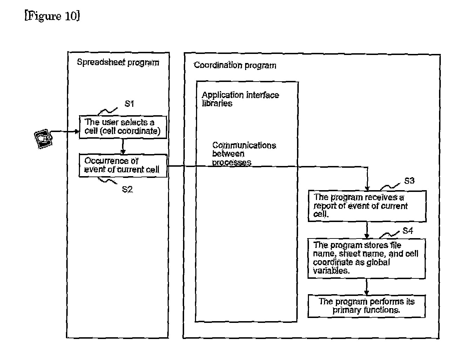

Flows of procedures performed by the coordination program are explained below with reference to Figures 10 to 13. Figure 10 illustrates procedures of processing triggered by events performed by the coordination program and the spreadsheet program generating the spreadsheet. The coordination program keeps watching occurrences of events via an application interface provided by the OS while the coordination program is executed.

For example, it is supposed that a specific cell in the spreadsheet generated by the spreadsheet program is selected by the user by use of the pointing device (S1). Then, the OS generates an event of change of current cell (S2). The event of change of current cell is reported to the coordination program in communications between processes managed by the OS.

The data processing apparatus executing the coordination program performs a predetermined processing relating to the event when the event is reported. More concretely, first, the coordination program receives the report of the event via the application interface (S3). The data processing apparatus performing the processing of S3 corresponds to a unit for receiving in the claims of the present invention.

Then, the data processing apparatus stores a file name of the spreadsheet that generated the event of change of current cell, a sheet name, and a cell coordinate as global variables via the application interface (S4). Then, the coordination program performs the procedures for setting for voice recognition, procedures for entering data sets by voice, and procedures for reproducing recorded voice, as its primary functions.

Cooperative procedures of the voice recognition engine and the coordination program are also performed in a similar way. Namely, when the user produces a sound and the sound is converted to a set of characters by the voice recognition engine, an event of voice data entry is reported from the voice recognition engine to the coordination program in communications between processes managed by the OS. The coordination program obtains the recognized set of characters from the application interface provided by the voice recognition engine.

The recognized set of characters is further handed over from the coordination program to the spreadsheet program via the application interface in communications between processes. A file name, a sheet name, and a cell coordinate that specify the position to which the data to be entered are also reported to the spreadsheet program together with the data to be entered.

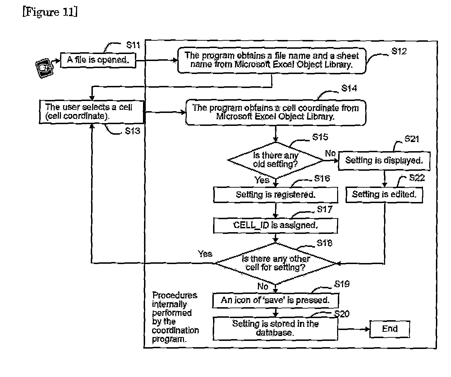

Figure 11 illustrates an outline flow of procedures performed when parameters for voice recognition are set. In the procedures, for example, the spreadsheet is dragged and dropped to the icon of the coordination program as explained with reference to Figure 1 in accordance with an operation made by the user. Alternatively, the user may start the coordination program and instruct the coordination program to display a data entry sheet that the user saved in the spreadsheet instead of the dragand-drop operation. In response to such an operation made by the user, a file of spreadsheet is opened (S11).

Then, in a way similar to the way of selection of a cell as explained above with reference to Figure 10, the data processing apparatus executing the coordination program receives a report of event. The data processing apparatus also obtains a name of the opened file and a name of sub-sheet displayed in the top layer in the spreadsheet via the application interface provided by the OS (S12).

The user selects a cell to which the user wishes to set parameters for voice recognition (S13). In response to the selection, the data processing apparatus obtains a cell coordinate of the selected cell via the application interface provided by the OS (S14). The data processing apparatus performing the procedures of S12 and S14 also corresponds to the unit for receiving in the claims of the present invention.

The data processing apparatus determines whether no parameter has been set to the selected cell or any parameters have already been set to the selected cell (S15). When no parameter has been set to the selected cell, the data processing apparatus sets parameters to the selected cell in accordance with operations made by the user (S16). The data processing device performing the procedure of S16 corresponds to a unit for receiving in the claims of the present invention. The procedure was explained above with reference to Figure 2.

The data processing apparatus assigns a cell ID to the cell (S17).

The user may continue to set parameters with regard to another cell, or complete to set parameters. Depending on the user's choice, the data processing apparatus performs different procedures (S18). Namely, if the user continues to set parameters to another cell, the data processing apparatus repeats a series of procedures starting from S13 in response to a selection of cell made by the user.

On the other hand, if the user does not wish to set parameters to any other cell, the user presses an icon of 'save' by the pointing device (S19). In response to the operation made by the user, parameters set by the user are stored in the database (S20). Then, the data processing apparatus terminates the series of procedures.

If the data processing apparatus determines that some parameters have already been set to the selected cell in S15, the data processing apparatus displays the parameters (S21). In accordance with operations made by the user, the data processing apparatus edits the parameters to be set to the cell (S22). Then, the procedures from S18 are performed as explained above.

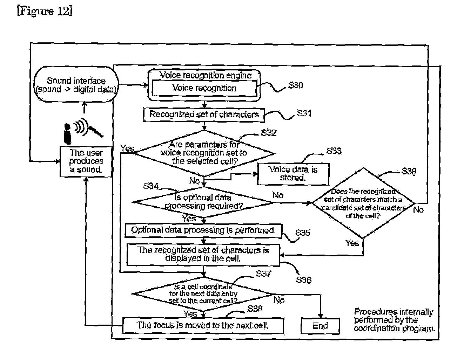

Figure 12 illustrates an outline flow of procedures performed when data sets are entered to the data entry sheet by voice recognition. In the procedures, the user starts the coordination program and lets the data processing apparatus display the spreadsheet functioning as the data entry sheet. Then, the user produces a sound to the microphone. In response to the production of sound, the data processing apparatus picks us the sound and converts the sound to digital voice data by use of a predetermined interface. The data processing apparatus hands over the voice data to the voice recognition engine. The voice recognition engine performs the well known procedures for recognizing the voice and converts the voice data to a set of characters (S30). The voice recognition engine hands over the recognized set of characters to the data processing apparatus executing the coordination program via the application interface (S31). The data processing device performing the procedure of S31 corresponds to a unit for receiving a recognized set of characters in the claims of the present invention. Moreover, the series of procedures from S32 correspond to a data processing in relation to the set of characters in the claims of the present invention.

The data processing apparatus determines whether any parameters for data entry by voice have been set to the cell currently focused (S32). If any parameters for data entry by voice have been set to the cell currently focused, the data processing apparatus stores the voice data received from the voice recognition engine in the cell as recorded voice data (S33). The data processing apparatus performing the procedure of S33 corresponds to a unit for storing in the claims of the present invention.

Next, the data processing apparatus determines whether any optional data processing is required with regard to the cell (S35). The optional data processing is typically a predetermined calculation using a number, date, currency, etc. that are indicated by the set of characters recognized from a sound

If any optional data processing is required with regard to the cell, the data processing apparatus performs the required optional data processing. An example of optional data processing will be explained below using a case where numeric data and text data are entered by voice. For example, it is supposed that the data entry sheet has a cell to which data of date type should be entered by voice, and a format of 'year/month/date' is set to the cell.

It is supposed that the user produces a sound of year 2006, month 12, date 26' when the focus is put on the cell. In the case, the voice recognition engine generates a set of characters of 'year/2000/6/month/10/2/date/2/10/6' and hand it over to the coordination program. Namely, according to the data processing apparatus, numeric data is forwarded from the voice recognition engine to the coordination program in a format of combination of number of each digit and title of the digit.

The data processing apparatus executing the coordination program assembles the numbers of digits in accordance with the titles of digit to generate numbers in a normal format. Namely, numbers of '2006', '12', and '26' are generated. Then, the data processing apparatus generates a set of characters of 'year 2006, month 12, date 26'. The data processing apparatus converts the set of characters in accordance with the format of'year/month/date' to generate a set of characters of '2006/12/26', and enter the set of characters to the cell. In this case, the optional data processing comprises an assemble of numbers of each digit to generate a number in a normal format and a conversion of text data format.

Next, the coordination program instructs, via the application interface, the spreadsheet program to store the set of characters in the cell and display the set of characters in the above-mentioned format. Following the instructions, the data processing apparatus displays the recognized set of characters in the target cell (S36). The data processing device determines whether a cell coordinate indicating a cell to be focused is set to the currently focused cell (S37). When a cell coordinate indicating a cell to be focused is set to the current cell, the data processing apparatus moves the focus to the cell identified by the cell coordinate (S38). Then, the data processing apparatus waits for another sound is produced by the user.

When a cell coordinate of a cell to be focused is not set to the current cell, the data processing apparatus terminates the series of procedures after it stores the recognized set of characters to the current cell and displays the set of characters. Then, the data processing apparatus waits for any further operation to be made by the user.

On the other hand, when the data processing apparatus determines that no optional data processing is required in connection with the current cell in S34, the data processing apparatus performs procedures for entering a text data set without numeric data in a normal format to the current cell. In the procedures, the data processing apparatus determines whether the recognized set of characters matches any one of the candidate sets of characters that are registered in advance (S39). Then the recognized set of characters matches one of them, the data processing apparatus displays the matched set of characters in the target cell (S36).

When the data processing apparatus determines that no candidate set of character matches the recognized set of characters in S39, the data processing apparatus waits for another sound is produced by the user, since the data processing apparatus judges that the sound produced by the user was incorrectly recognized and it needs to receive a sound produced by the user again.

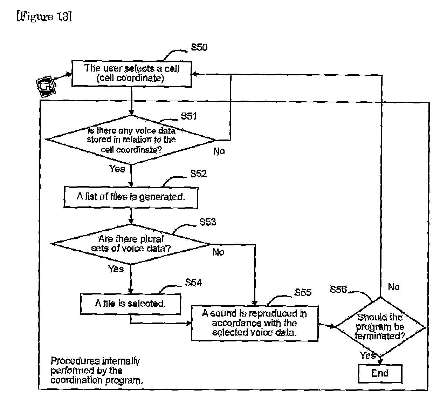

Figure 13 illustrates an outline flow of procedures performed for reproducing recorded voice. In the procedures, first, the user selects a cell by use of the pointing device (S50). Alternatively, the user may selects the cell by producing a sound of a moving-focus keyword to move the focus to the cell.

Next, the data processing apparatus determines whether any voice data sets are stored in relation to the cell coordinate of the selected cell (S51). When any voice data sets are stored in relation to the cell coordinate, the data processing apparatus generate a list of files of the voice data sets (S53).

Then, the data processing apparatus determines whether a list contains plural files of voice data (S53). When plural files of voice data are contained in the list, the data processing apparatus prompts the user to select one of the files (S54). When the user selects one of the file, the data processing apparatus reproduces a sound in accordance with the selected file of voice data. When only one file of voice data is included in the list in S51, the data processing apparatus reproduces a sound in accordance with the file (S55). More concretely, the data processing apparatus instructs a sound reproducing unit of the voice recognition engine to reproduce the sound of voice via the application interface. The data processing apparatus performing the procedure corresponds to a unit for reproducing a sound in the claims of the present invention.

Next, the data processing apparatus prompts the user to instruct either to close the program or continue to perform the voice reproduction procedures (S56). When the user instructs the data processing apparatus to continue to perform the voice reproduction procedures, the data processing apparatus repeats the series of procedures from S50. On the other hand, when the user instructs the data processing apparatus to close the program, the data processing apparatus terminates the series of procedures.

### <Effects of embodiment>

As explained above, the data processing apparatus according to the embodiment executes the coordination program that coordinates the spreadsheet program for displaying a spreadsheet functioning as a data entry sheet and the voice recognition engine.

In a mode for setting parameters for voice recognition, the coordination program prompts the user to set candidate sets of characters that may be entered to a cell and their pronunciations with regard to each of cells to which a set of characters recognized from voice in the spreadsheet may be entered, and facilitates the user to register such candidate sets of characters and their pronunciations to the database. Combinations of candidate set of characters and pronunciation are registered to the user-editable portion of the dictionary. In a mode for entering data by voice, the coordination program obtains recognized set of characters from the microphone via the voice recognized engine with regard to each of cells that are focused. When the recognized set of characters matches any one of the candidate sets of characters registered to the cell in the mode for setting parameters for voice recognition, the coordination program sets the recognized set of characters to the cell. According to the procedures for registering candidate sets of characters to the database in the mode for setting parameters for voice recognition and the procedures for matching the recognized set of characters and the registered candidate sets of characters, a voice recognition function with a low rate of false recognition can be added to the spreadsheet functioning as a data entry sheet.

Moreover, the coordination program facilitates the user to set a type of data to be entered to a cell and a format for displaying a data set entered to the cell with regard to each of cells to which numeric data sets may be entered. The numeric data sets may contain number, currency, date, time, postal code, telephone number, etc. With regard to numeric data, the coordination program receives the number in a format of combination of numbers of each digit and title of the digit, and assembles the numbers to generate a number in a normal format. With regard to data other than numeric data, the coordination program converts the data in a format that is set to the cell. As explained above, the coordination program cooperates with the voice recognition engine and lets the user to enter data that may contain numeric data to a cell selected by the user in a format selected by the user.

During the voice recognition, the coordination program stores a file containing voice data indicating the voice picked up by the microphone in relation to the currently focused cell. Accordingly, the coordination program can reproduce each sound of voice that was produced by the user when a data set was entered to a cell after the data entry by voice was done in response to the user's operation for selecting the cell.

Moreover, while the above-mentioned voice recognition function and voice recording function are added to the spreadsheet, the coordination program receives from the application interface managed by the OS events of operations made by the user to the spreadsheet, and performs predetermined data processing relating to the cell. For example, in response to such an event of the user's operation, the coordination program obtains parameters for voice recognition that are entered to the cell by the user, and stores the parameters in the database in relation to the cell. When the user produces a sound of voice, the coordination program detects an event that is generated by the voice recognition engine, and receives a recognized set of characters. Then, the coordination program stores the recognized set of characters in the cell currently focused by the user in the spreadsheet. As explained above, the coordination program adds a voice recognition function to the spreadsheet program for displaying the spreadsheet by use of the well known voice recognition engine without make any substantial modification in the spreadsheet program.

### <Remarks>

The above-explained coordination program may be installed to a computer used by the user via a network. The program may be stored in a computer-readable recording medium, such as DVD, CD-ROM, and removable disks, and distributed in the medium.

### INDUSTRIAL APPLICABILITY

As explained above, the program, the apparatus, the method, etc. provided by the present invention are useful for programs, systems, etc. for entering data sets by voice recognition to a data entry sheet displayed on a computer screen comprising plural elements for data entry.

## Claims

1. A coordination program for letting a computer that executes a computer program containing a user interface, the user interface having plural data entry elements each of which is related to each of plural positions in a sheet displayed in a screen of the computer and displaying, when a data set is set in one of the plural data entry elements, the entered data set at a position related to the one of the plural data entry elements in the sheet in a predetermined format, function as:
a unit for receiving data concerning an operation made to the user interface by an inputting device of the computer from the computer program,
a unit for receiving data concerning candidate sets of characters that may be recognized from a sound of voice, and that may be entered to the sheet in relation to one of the plural positions in the sheet, when the user interface receives a selection of the one of the plural positions in the sheet, and
a unit for storing the data concerning the candidate sets of characters in relation to the one of the plural positions in the sheet.

2. A coordination program according to claim 1 further letting the computer function as:
a unit for receiving a recognized set of characters from a voice recognition unit, the voice recognition unit obtaining a sound and recognizing a set of characters indicating the sound, and
a unit for performing data processing in relation to the recognized set of characters received from the voice recognition unit.

3. A coordination program according to claim 2, wherein:
the data processing in relation to the set of characters is any one of
data processing for matching the recognized set of characters and the data concerning the candidate sets of characters,
data processing for converting the recognized set of characters in a predetermined format in accordance with the data concerning the candidate sets of characters,
data processing for instructing the computer program to enter the recognized set of characters or the converted recognized set of characters to the one of the plural data entry elements,
data processing for instructing the computer program to display the recognized set of characters or the converted recognized set of characters in the one of the plural data entry elements,
data processing for instructing the computer program to select one of the plural positions in the sheet, and
data processing for instructing the computer program to change, when another sheet that is different from the sheet is displayed in a screen of the computer together with the sheet as a set of layers, an order of the sheet and the another sheet in the set of layers.

4. A coordination program according to claim 3 further letting the computer function as:
a unit for letting a user to appoint in advance another position in the sheet to which another recognized set of characters should be entered after the instruction to enter the recognized set of characters is completed,
wherein:
the unit for performing data processing changes a position to be processed from the one of the plural positions to the another position that is appointed in advance, after the instruction to enter the recognized set of characters is completed.

5. A coordination program according to any one of claims 1 to 4 further letting the computer function as:
a unit for storing a voice data set indicating a sound that is received from the voice recognition unit in relation to a position in the sheet, and
a unit for reproducing a sound by use of a reproducing unit in accordance with a voice data set that is stored in relation to a position in the sheet when the user interface receives a selection of the position.

6. A coordination program according to any one of claims 1 to 5, wherein:
the sheet contains a table having plural elements each of which corresponds to each of the plural data entry elements aligned in a matrix, and
each of the positions in the sheet is specified by a low identifier for identifying one of plural lows of the table and a column identifier for identifying one of plural columns of the table.

7. A coordination method performed by a computer that executes a computer program containing a user interface, the user interface having plural data entry elements each of which is related to each of plural positions in a sheet displayed in a screen of the computer and displaying, when a data set is set in one of the plural data entry elements, the entered data set at a position related to the one of the plural data entry elements in the sheet in a predetermined format, comprising:
a step for the computer to receive data concerning an operation made to the user interface by an inputting device of the computer from the computer program,
a step for the computer to receive data concerning candidate sets of characters that may be recognized from a sound of voice, and that may be entered to the sheet in relation to one of the plural positions in the sheet, when the user interface receives a selection of the one of the plural positions in the sheet, and
a step for the computer to store the data concerning the candidate sets of characters in relation to the one of the plural positions in the sheet.

8. A coordination method according to claim 7 further comprising:
a step for the computer to receive a recognized set of characters from a voice recognition unit, the voice recognition unit obtaining a sound and recognizing a set of characters indicating the sound, and
a step for the computer to perform data processing in relation to the recognized set of characters received from the voice recognition unit.

9. A data processing apparatus that executes a computer program containing a user interface, the user interface having plural data entry elements each of which is related to each of plural positions in a sheet displayed in a screen of the computer and displaying, when a data set is set in one of the plural data entry elements, the entered data set at a position related to the one of the plural data entry elements in the sheet in a predetermined format, comprising:
an inputting unit for generating an input data set in response to an operation that is made to the inputting unit by a user,
a unit for receiving data concerning an operation made to the user interface by the inputting unit from the computer program,
a unit for receiving data concerning candidate sets of characters that may be recognized from a sound of voice, and that may be entered to the sheet in relation to one of the plural positions in the sheet, when the user interface receives a selection of the one of the plural positions in the sheet, and
a unit for storing the data concerning the candidate sets of characters in relation to the one of the plural positions in the sheet.

10. A data processing apparatus according to claim 9 further comprising:
a unit for receiving a recognized set of characters from a voice recognition unit, the voice recognition unit obtaining a sound and recognizing a set of characters indicating the sound, and
a unit for performing data processing in relation to the recognized set of characters received from the voice recognition unit.
